(19) Europäisches Patentamt
European Patent Office
Office européen des brevets

(11) **EP 4 666 876 A1**

(12) **EUROPEAN PATENT APPLICATION**
published in accordance with Art. 153(4) EPC

(43) Date of publication:
**24.12.2025 Bulletin 2025/52**

(21) Application number: **23923816.5**

(22) Date of filing: **30.11.2023**

(51) International Patent Classification (IPC):
**A24C 5/01** (2020.01)    **B30B 11/22** (2006.01)

(52) Cooperative Patent Classification (CPC):
**A24C 5/01; B29C 48/345; B30B 11/22**

(86) International application number:
**PCT/CN2023/135509**

(87) International publication number:
**WO 2024/174653 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.02.2023 CN 202320262671 U**

(71) Applicant: **Smoore International Holdings Limited**
**George Town, Grand Cayman, KY1-1111 (KY)**

(72) Inventors:
 • **WANG, Jianguo**
  **Shenzhen, Guangdong 518102 (CN)**
 • **DENG, Zhenyong**
  **Shenzhen, Guangdong 518102 (CN)**

 • **HU, Changhe**
  **Shenzhen, Guangdong 518102 (CN)**
 • **CHEN, Zhiping**
  **Shenzhen, Guangdong 518102 (CN)**
 • **NI, Jun**
  **Shenzhen, Guangdong 518102 (CN)**
 • **WEI, Mingwen**
  **Shenzhen, Guangdong 518102 (CN)**
 • **LIANG, Feng**
  **Shenzhen, Guangdong 518102 (CN)**
 • **TANG, Jianguo**
  **Shenzhen, Guangdong 518102 (CN)**

(74) Representative: **Gevers Patents**
**De Kleetlaan 7A**
**1831 Diegem (BE)**

(54) **MOLD FOR MANUFACTURING AEROSOL GENERATION ARTICLE**

(57) Provided is a mold for manufacturing an aerosol generation article. The mold comprises: a first main body, which is internally provided with a plurality of feeding channels, wherein in a plane perpendicular to an axial direction of the first main body, the cross-sectional area of the feeding channel located upstream of a feeding direction is no less than that of the feeding channel located downstream of the feeding direction; and a second main body, which is arranged at one end of the first main body in the axial direction, and is internally provided with a plurality of extrusion channels in communication with the feeding channels, wherein in a plane perpendicular to an axial direction of the second main body, the cross-sectional area of the extrusion channel located upstream of an extrusion direction is no less than that of the extrusion channel located downstream of the extrusion direction.

FIG. 7

**EP 4 666 876 A1**

**Description**

This application claims priority to Chinese Patent Application No. 202320262671.X, filed on February 20, 2023, which is hereby incorporated by reference in its entirety.

**TECHNICAL FIELD**

The present application relates to the technical field of dies, and in particular, to a die for producing aerosol-generating articles.

**BACKGROUND**

Aerosol-forming articles include those that generate aerosols by combustion and those that generate aerosols by heat-not-burn means. Under the same volume and mass (equal density) conditions, the atomization efficiency of the aerosol-forming articles can be improved by improving heat conduction efficiency and aerosol transmission efficiency, that is, the smoke volume of the aerosol-forming articles can be increased.

No die is available in the prior art for producing aerosol-forming articles with completely kneaded mesh structures. That is, the aerosol-forming articles produced by the dies in the prior art exhibit low heat conduction efficiency and aerosol transmission efficiency due to non-uniform material void distribution, high specific surface area, etc.

**SUMMARY**

In view of this, an objective of embodiments of the present application is to provide a die for producing aerosol-generating articles. The die can ensure that the aerosol-generating articles have relatively high heat conduction efficiency and aerosol transmission efficiency.

To achieve the above objective, an embodiment of the present application provides a die for producing aerosol-generating articles, including:

a first main body, where the first main body has a plurality of feed channels inside, each of the feed channels runs through two opposite ends of the first main body in an axial direction, and on planes perpendicular to the axial direction of the first main body, a cross-sectional area of the feed channel located upstream in a feeding direction is not less than a cross-sectional area of the feed channel located downstream in the feeding direction; and

a second main body arranged at one end of the first main body in the axial direction, where the second main body has a plurality of extrusion channels inside, each of the extrusion channels runs through two opposite ends of the second main body in the axial direction and is in communication with the feed channel, on planes perpendicular to the axial direction of the second main body, a cross-sectional area of the extrusion channel located upstream in an extrusion direction is not less than a cross-sectional area of the extrusion channel located downstream in the extrusion direction, and a maximum value of the cross-sectional area of the extrusion channels is less than or equal to a minimum value of the cross-sectional area of the feed channels.

In some embodiments, on the planes perpendicular to the axial direction of the first main body, the cross-sectional area of each of the feed channels is the same or gradually decreases in the feeding direction.

In some embodiments, on the planes perpendicular to the axial direction of the second main body, the cross-sectional area of each of the extrusion channels is the same or gradually decreases in the extrusion direction.

In some embodiments, the feed channels are formed in the first main body in a form of uniform distribution, and on the planes perpendicular to the axial direction of the first main body, the cross-sectional shape of the feed channels is circular.

In some embodiments, the feed channels are parallel to a center axis of the die, and a distance between centers of two adjacent feed channels ranges from 0.500 mm to 2.54 mm.

In some embodiments, the second main body includes a shell and a plurality of columns arranged in the shell, and the columns are spaced apart to form the extrusion channels.

In some embodiments, the die includes a plurality of repeating units, each of the repeating units includes one column and a plurality of feed channels corresponding to the column, and the plurality of feed channels in each repeating unit are arranged in a circumferential direction around a center of the column.

In some embodiments, each repeating unit includes one column and four feed channels corresponding to the column, lines for connecting centers of the four feed channels form a square, and a center line of the square coincides with a center axis of the column.

In some embodiments, on the planes perpendicular to the axial direction of the second main body, a cross-sectional shape of the columns is circular, polygonal, elliptical, track-shaped, or sector-shaped.

In some embodiments, a quantity of the feed channels ranges from 100 to 2580; and/or, on the planes perpendicular to the axial direction of the first main body, the cross-sectional shape of the feed channels is circular, polygonal, elliptical, track-shaped, or sector-shaped.

In some embodiments, a porosity of the second main body ranges from 15.1% to 72.5%; and/or, a porosity of the first main body ranges from 19.6% to 72.5%.

In some embodiments, a ratio of a porosity of the first main body to a porosity of the second main body is n, and $1 \leq n \leq 3$.

In some embodiments, all of the feed channels are distributed along a plurality of trajectory lines, where the feed channels along a single trajectory line are arranged linearly in a first direction, the plurality of trajectory lines are arranged in a second direction, and the first direction is not parallel to the second direction.

In some embodiments, the feed channels along the single trajectory line are arranged in a circumferential direction around a center of the first main body, and the plurality of trajectory lines are arranged in concentric circles in a radial direction.

In some embodiments, the feed channels along the single trajectory line are arranged linearly in the first direction, and the plurality of trajectory lines are arranged in parallel in the second direction, where the first direction is perpendicular to the second direction.

In some embodiments, a distance between two adjacent feed channels along the single trajectory line is equal to a distance between two adjacent trajectory lines.

The die for producing aerosol-generating articles, provided in the embodiments of the present application, includes the first main body and the second main body, the first main body has the plurality of feed channels inside, and each feed channel runs through two opposite ends of the first main body in the axial direction, that is, a raw material mixture can be guided from one end of the first main body to the other end through the feed channels; and the second main body is arranged at one end of the first main body in the axial direction, the second main body has the plurality of extrusion channels inside, and each extrusion channel runs through two opposite ends of the second main body in the axial direction and is in communication with the feed channel, that is, the raw material mixture can enter the extrusion channels through the feed channels and be extruded through the extrusion channels to produce various cross-sectional articles or semi-finished articles. Because the heat conduction efficiency and aerosol transmission efficiency of the aerosol-generating articles are related to their porosity (the higher the porosity, the lower the heat conduction efficiency, and the higher the aerosol transmission efficiency; and conversely, the lower the porosity, the higher the heat conduction efficiency, and the lower the aerosol transmission efficiency), the porosity of the aerosol-generating articles produced by the die can be controlled by controlling the porosity of the second main body (controlling the quantity and cross-sectional area of the extrusion channels), thereby ensuring that the aerosol-generating articles have high heat conduction efficiency and high aerosol transmission efficiency at the same time, and improving the atomization efficiency of the aerosol-generating articles.

In addition, on the planes perpendicular to the axial direction of the first main body, the cross-sectional area of the feed channel located upstream in the feeding direction is not less than that of the feed channel located downstream in the feeding direction, thereby facilitating the feeding of the raw material mixture; and on the planes perpendicular to the axial direction of the second main body, the cross-sectional area of the extrusion channel located upstream in the extrusion direction is not less than that of the extrusion channel located downstream in the extrusion direction, whereby the raw material mixture can maintain a certain extrusion pressure or be subjected to a gradually increasing extrusion pressure in the extrusion channels. When the maximum value of the cross-sectional area of the extrusion channels is less than the minimum value of the cross-sectional area of the feed channels, after the raw material mixture enters the extrusion channels through the feed channels, the raw material mixture is further extruded in the extrusion channels, thereby promoting complete kneading of mesh structures and controlling the density of the aerosol-generating articles under the certain porosity of the aerosol-generating articles. Because the heat conduction efficiency and aerosol transmission efficiency of the aerosol-generating articles are related to their density (the higher the density, the higher the heat conduction efficiency, and the lower the aerosol transmission efficiency; and conversely, the lower the density, the lower the heat conduction efficiency, and the higher the aerosol transmission efficiency), the density of the aerosol-generating articles is controlled by controlling the extrusion pressure on the raw material mixture in the extrusion channels, thereby ensuring that the aerosol-generating articles have high heat conduction efficiency and high aerosol transmission efficiency at the same time, and improving the atomization efficiency of the aerosol-generating articles.

## BRIEF DESCRIPTION OF THE DRAWINGS

FIG. 1 is a schematic structural diagram of a die according to a first embodiment of the present application;

FIG. 2 is a schematic structural diagram of a die according to a second embodiment of the present application;

FIG. 3 is a schematic structural diagram of a die according to a third embodiment of the present application;

FIG. 4 is a schematic structural diagram of a die according to a fourth embodiment of the present application;

FIG. 5 is a schematic structural diagram of a die according to a fifth embodiment of the present application;

FIG. 6 is a schematic structural diagram of a die according to a sixth embodiment of the present application;

FIG. 7 is a cross-sectional view of FIG. 6;

FIG. 8 is a cross-sectional view of FIG. 5;

FIG. 9 is a cross-sectional view of FIG. 4;

FIG. 10 is a cross-sectional view of FIG. 3; and

FIG. 11 is a partial schematic diagram of FIG. 3.

## DETAILED DESCRIPTION

It should be noted that the embodiments in the present application and the technical features in the embodiments can be combined with each other on a non-conflict basis. The detailed description in specific implementations should be understood as an explanation of the objective of the present application and should not be regarded as an undue limitation on the present application.

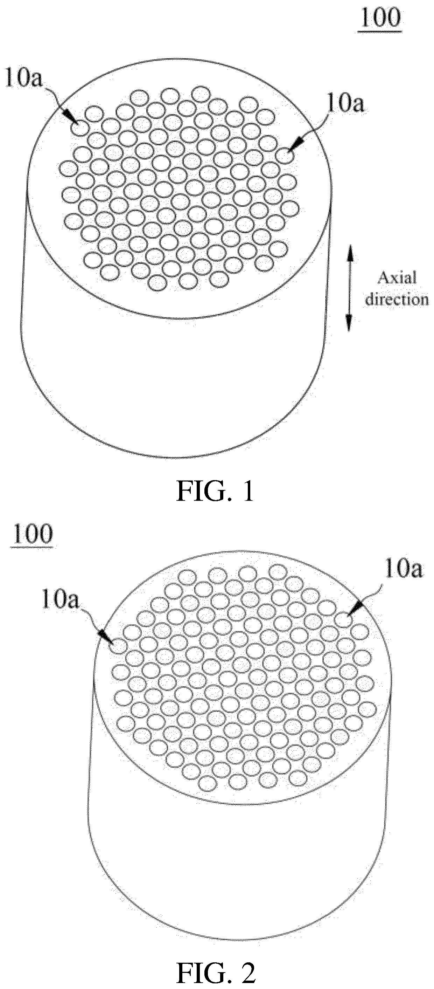

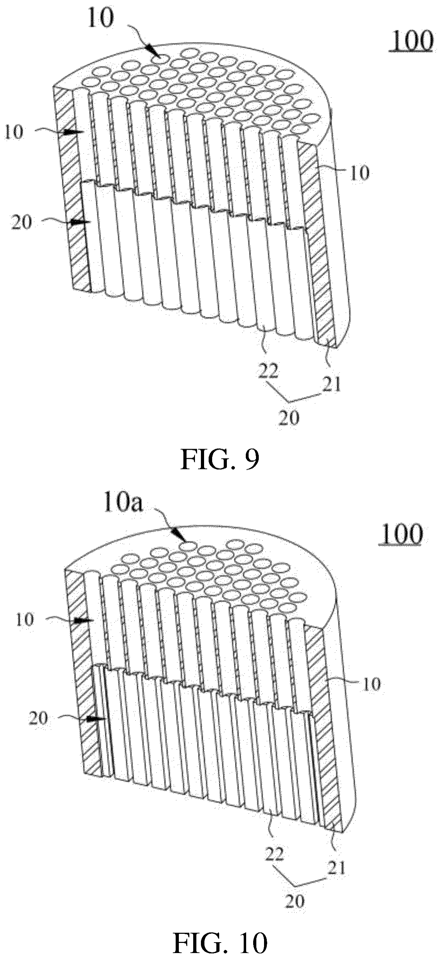

An embodiment of the present application provides a die for producing aerosol-generating articles. Referring to FIG. 1 to FIG. 10, the die 100 includes a first main body 10 and a second main body 20.

The die provided in the embodiments of the present application can produce aerosol-generating articles through a continuous extrusion process, and the die can be used with any suitable extruder in the extrusion process. For example, the extruder may be a hydraulic plunger extruder, a twin-screw extruder, a single screw extruder, etc.

A mixture is extruded from the die 100 into a honeycomb body, then dried, and fired to form all or part of a final honeycomb aerosol-generating article.

Referring to FIG. 1, FIG. 2, and FIG. 7 to FIG. 10, the first main body 10 has a plurality of feed channels 10a inside, and each feed channel 10a runs through two opposite ends of the first main body 10 in an axial direction, that is, a raw material mixture can be guided from one end of the first main body 10 to the other end through the feed channels 10a.

On planes perpendicular to the axial direction of the first main body 10, the cross-sectional area of the feed channel 10a located upstream in a feeding direction is not less than that of the feed channel 10a located downstream in the feeding direction. In this way, the raw material mixture can maintain a certain extrusion pressure or be subjected to a gradually increasing extrusion pressure in the feed channels 10a.

The arrangement of the plurality of feed channels 10a ensures uniform feeding and enables the certain extrusion pressure on the raw material mixture in extrusion channels 20a.

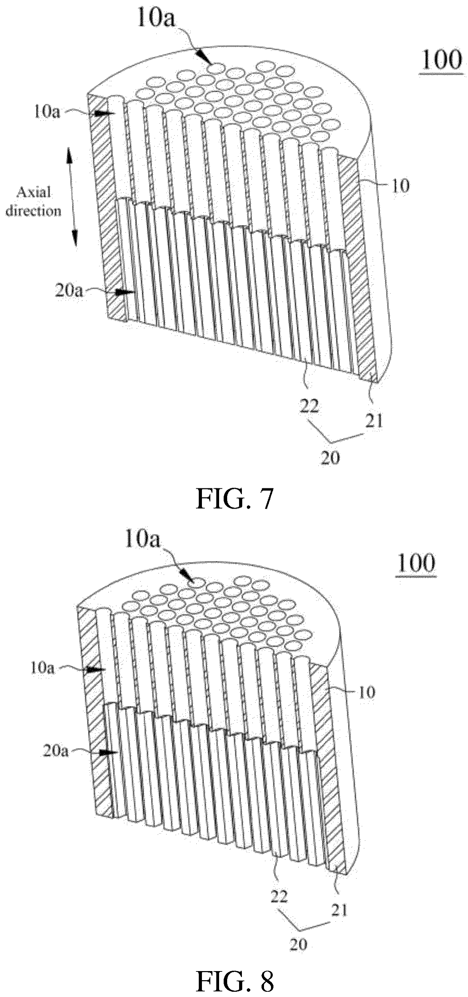

Referring to FIG. 7 to FIG. 10, the second main body 20 is arranged at one end of the first main body 10 in the axial direction, the second main body 20 has a plurality of extrusion channels 20a inside, and each extrusion channel 20a runs through two opposite ends of the second main body 20 in the axial direction and is in communication with the feed channel 10a, that is, the raw material mixture can enter the extrusion channels 20a through the feed channels 10a and be extruded through the extrusion channels 20a to produce various cross-sectional articles or semi-finished articles.

On planes perpendicular to the axial direction of the second main body 20, the cross-sectional area of the extrusion channel 20a located upstream in an extrusion direction is not less than that of the extrusion channel 20a located downstream in the extrusion direction. In this way, the raw material mixture can maintain a certain extrusion pressure or be subjected to a gradually increasing extrusion pressure in the extrusion channels 20a, and the raw material mixture is gradually kneaded and molded.

The feed channels 10a extend towards the extrusion channels 20a formed in the second main body 20 and intersect with the extrusion channels 20a. The raw material mixture is extruded through the extrusion channels 20a which are in communication with one another and the extrudate forms a honeycomb article or a semi-finished article.

It should be noted that, in the embodiments of the present application, "a plurality of" refers to two or more.

Exemplarily, the aerosol-generating articles are particulate agglomerates, such as reconstituted tobacco media containing aerosol-forming agents, tobacco, and other ingredients, formed into integrated structures through continuous extrusion processes. Extrusion molding refers to a processing method in which a raw material mixture is added to an extruder and pushed forward by a screw through the interaction between a barrel and the screw of the extruder, and continuously passes through the die 100 according to the embodiments of the present application to produce various cross-sectional articles or semi-finished articles. In addition, the articles or semi-finished articles extruded through the die 100 can be made into different components of the aerosol-generating articles, such as plug segments, aerosol-forming segments, supporting segments, and filter segments, or can be directly made into entire aerosol-generating articles, which is not limited herein.

Exemplarily, referring to FIG. 7 to FIG. 10, the first main body 10 and the second main body 20 form an integrated structure. The integration of the first main body 10 and the second main body 20 can reduce the quantity of components, shorten assembly time, and improve assembly efficiency.

Alternatively, the first main body 10 and the second main body 20 may be configured as split structures.

It should be noted that the materials of the first main body 10 and the second main body 20 may be the same or different. Due to a relatively high extrusion pressure in the extrusion process, the die 100 for producing aerosol-generating articles is required to have high strength. In addition, the raw material mixture for the aerosol-generating articles contains moisture, which requires the die 100 to have certain capabilities such as rust resistance. Therefore, both the first main body 10 and the second main body 20 may be made of high-strength stainless steel, such as austenitic stainless steel or martensitic stainless steel.

For solid aerosol-generating articles, under the same volume and mass (equal density) conditions, the atomization efficiency of aerosol-forming articles can be improved by improving heat conduction efficiency and aerosol transmission efficiency, that is, the smoke volume of aerosol-generating articles can be increased. It can be understood that the heat conduction efficiency of the aerosol-generating articles can be improved by increasing their density and decreasing their porosity, and the aerosol transmission efficiency can be improved by decreasing their density and increasing their porosity. In related technologies, the disordered and non-fixed material structures of existing solid aerosol-generating articles incur a series of long-standing problems in atomization. For example, due to non-uniform material void distribution and high specific surface area, the aerosol-generating articles exhibit poor temperature uniformity, poor taste consistency, low heat conduction efficiency, low aerosol transmission efficiency, and low atomization efficiency.

The die 100 for producing aerosol-generating articles, provided in the embodiments of the present application, includes the first main body 10 and the second main body 20. The first main body 10 has the plurality of feed channels 10a inside, and each feed channel 10a runs through two opposite ends of the first main body 10 in the axial direction, that is, the raw material mixture can be guided from one end of the first main body 10 to the other end through the feed channels 10a; and the second main body 20 is arranged at one end of the first main body 10 in the axial direction, the second main body 20 has a plurality of extrusion channels 20a inside that are in communication with one another, and each extrusion channel 20a runs through two opposite ends of the second main body 20 in the axial direction and is in communication with the feed channel 10a, that is, the raw material mixture can enter the extrusion channels 20a through the feed channels 10a and be extruded through the extrusion channels 20a to produce various cross-sectional articles or semi-finished articles. Because the heat conduction efficiency and aerosol transmission efficiency of the aerosol-generating articles are related to their porosity (the higher the porosity, the lower the heat conduction efficiency, and the higher the aerosol transmission efficiency; and conversely, the lower the porosity, the higher the heat conduction efficiency, and the lower the aerosol transmission efficiency), the porosity of the aerosol-generating articles produced by the die 100 can be controlled by controlling the porosity of the second main body 20 (controlling the quantity and cross-sectional area of the extrusion channels 20a), thereby ensuring that the aerosol-generating articles produced by the die have high heat conduction efficiency and high aerosol transmission efficiency at the same time, and improving the atomization efficiency of the aerosol-generating articles.

In addition, on the planes perpendicular to the axial direction of the first main body 10, the cross-sectional area of the feed channel 10a located upstream in the feeding direction is not less than that of the feed channel 10a located downstream in the feeding direction, thereby facilitating the feeding of the raw material mixture; and on the planes perpendicular to the axial direction of the second main body 20, the cross-sectional area of the extrusion channel 20a located upstream in the extrusion direction is not less than that of the extrusion channel 20a located downstream in the extrusion direction, whereby the raw material mixture can maintain the certain extrusion pressure or be subjected to the gradually increasing extrusion pressure in the extrusion channels 20a. When the maximum value of the cross-sectional area of the extrusion channels 20a is less than the minimum value of the cross-sectional area of the feed channels 10a, after the raw material mixture enters the extrusion channels 20a through the feed channels 10a, the raw material mixture is further extruded in the extrusion channels 20a, thereby promoting complete kneading of mesh structures and controlling the density of aerosol-generating articles under the certain porosity of the aerosol-generating articles. Because the heat conduction efficiency and aerosol transmission efficiency of the aerosol-generating articles are related to their density (the higher the density, the higher the heat conduction efficiency, and the lower the aerosol transmission efficiency; and conversely, the lower the density, the lower the heat conduction efficiency, and the higher the aerosol transmission efficiency), the density of the aerosol-generating articles is controlled by controlling the extrusion pressure on the raw material mixture in the extrusion channels 20a, thereby ensuring that the aerosol-generating articles have high heat conduction efficiency and high aerosol transmission efficiency at the same time, and improving the atomization efficiency of the aerosol-generating articles.

On the planes perpendicular to the axial direction of the first main body 10, there are many cases where the cross-sectional area of the feed channel 10a located upstream in the feeding direction is not less than that of the feed channel 10a located downstream in the feeding direction. Exemplarily, in one embodiment, the cross-sectional area of each feed channel 10a is the same in the feeding direction, that is, each feed channel 10a has the equal diameter. In this way, the raw material mixture can maintain the certain extrusion pressure in the feed channels 10a, thereby facilitating the feeding of the raw material mixture.

In other embodiments, the cross-sectional area of each feed channel 10a gradually decreases in the feeding direction, that is, each feed channel 10a has the variable diameter, and the cross-sectional area of the feed channel 10a located upstream in the feeding direction is greater than that of the feed channel 10a located downstream in the feeding direction. In this way, the raw material mixture can be subjected to the gradually increasing extrusion pressure in the feed channels 10a, thereby facilitating preliminary kneading of the raw material mixture.

In yet other embodiments, the cross-sectional areas of part of the feed channels 10a may be the same, while the cross-sectional areas of another part of the feed channels 10a may gradually decrease in the feeding direction.

On the planes perpendicular to the axial direction of the second main body 20, there are various scenarios where the cross-sectional area of the extrusion channel 20a located upstream in the extrusion direction is not less than that of the extrusion channel 20a located downstream in the extrusion direction. Exemplarily, in one embodiment, the cross-sectional area of each extrusion channel 20a is the same in the extrusion direction, that is, each extrusion channel 20a has the equal diameter. In this way, the raw material mixture can maintain the certain extrusion pressure in the extrusion channels 20a, thereby facilitating complete kneading of mesh structures.

In other embodiments, the cross-sectional area of each extrusion channel 20a gradually decreases in the extrusion direction, that is, each extrusion channel 20a has the variable diameter, and the cross-sectional area of the extrusion channel 20a located upstream in the extrusion direction is greater than that of the extrusion channel 20a located downstream in the extrusion direction. In this way, the raw material mixture can be further extruded in the extrusion channels 20a, thereby promoting the complete kneading of the mesh structures.

In yet other embodiments, the cross-sectional areas of part of the extrusion channels 20a may be the same, while the cross-sectional areas of another part of the extrusion channels 20a may gradually decrease in the extrusion direction.

It should be noted that all the feed channels 10a may be formed in the first main body 10 in a form of uniform distribution (referring to FIG. 1 and FIG. 2) or non-uniform distribution.

It should be noted that, in the form of "uniform distribution", the feed channels 10a are distributed in a matrix or concentric circle, that is, the arrangement of the feed channels 10a is uniform. It can be understood that the feed channels 10a may not be uniform within the cross-section of the first main body 10, that is, the feed channels 10a are uniformly distributed, but do not uniformly segment the entire first main body 10. For example, the cross-section of the first main body 10 is circular, and the feed channels 10a distributed in a matrix are not uniformly distributed within the circular cross-section.

It should be noted that the shape of the first main body 10 is not limited herein. Exemplarily, on the planes perpendicular to the axial direction of the first main body 10, the cross-sectional shape of the first main body 10 includes, but is not limited to, circular, elliptical, track-shaped, or polygonal.

In the embodiments of the present application, the axial direction of the first main body 10 refers to the feeding direction. For example, when the appearance contour of the first main body 10 is cylindrical, the axial direction is a height direction perpendicular to the bottom surface of the first main body 10. For another example, when the appearance contour of the first main body 10 is cuboid, the axial direction is still as defined above, namely, the feeding direction, and the axial direction of the first main body 10 may be any direction of the length, width, or height of the cuboid.

The cross-sectional shape of the first main body 10 is taken along the planes perpendicular to the axial direction of the first main body 10.

It should be noted that the shape of the feed channels 10a is not limited herein. Exemplarily, on the planes perpendicular to the axial direction of the first main body 10, the cross-sectional shape of the feed channels 10a includes, but is not limited to, circular, elliptical, track-shaped, sector-shaped, or polygonal.

The cross-sectional shape of the feed channels 10a is taken along the planes perpendicular to the axial direction of the first main body 10.

The track shape refers to a shape similar to that of an athletics track, and is formed by connecting two semicircles and two parallel straight edges in an alternating arrangement.

The following is described by an example that the cross-sectional area of each feed channel 10a is the same in the feeding direction and the cross-sectional area of each extrusion channel 20a is the same in the extrusion direction. It can be understood that, in this case, the porosity of the first main body 10 is equal to the ratio of the area of the feed channels 10a to the area of the first main body 10 in the cross-section of the first main body 10, and similarly, the porosity of the second main body 20 is equal to the ratio of the area of the extrusion channels 20a to the area of the second main body 20 in the cross-section of the second main body 20.

In one embodiment, the porosity of the first main body 10 ranges from 19.6% to 72.5%, such as 19.6%, 20%, 23%, 25%, 30%, 32%, 35%, 38%, 40%, 45%, 50%, 52.5%, 55%, 57%, 60%, 65%, 68.5%, 70%, or 72.5%.

When the porosity of the first main body 10 is greater than 72.5%, the strength of the first main body 10 will be decreased to affect the strength of the die 100, which may affect the service life of the die 100 due to the high extrusion pressure during the extrusion process.

When the porosity of the first main body 10 is less than 19.6%, it is difficult for the raw material mixture for producing aerosol-generating articles to pass through the first main body 10, thereby reducing the production efficiency of the aerosol-generating articles. In addition, the excessively small porosity of the first main body 10 is not conducive to the processing and manufacturing of the first main body 10.

When the porosity of the first main body 10 ranges from 19.6% to 72.5%, the flow resistance to the raw material mixture is relatively small, that is, the raw material mixture passes through the first main body 10 relatively easily, and the processing and manufacturing are facilitated.

In one embodiment, each feed channel 10a is parallel to the center axis of the die 100, thereby facilitating the feeding of the raw material mixture.

In one embodiment, the distance between the centers of the two adjacent feed channels 10a ranges from 0.500 mm to 2.54 mm, such as 0.500 mm, 0.600 mm, 0.700 mm, 0.800 mm, 0.900 mm, 1.00 mm, 1.20 mm, 1.30 mm, 1.40 mm, 1.50 mm, 1.60 mm, 1.70 mm, 2.00 mm, 2.10 mm, 2.20 mm, 2.40 mm, 2.50 mm, or 2.54 mm.

In one embodiment, the quantity of the feed channels 10a ranges from 100 to 2580, such as 100, 150, 200, 500, 1000, 1500, 1600, 1800, 2000, 2100, 2300, 2500, or 2580.

In a case where the external dimensions of the first main body 10 and the feed channels 10a are definite, there is a negative correlation between the quantity of the feed channels 10a and the distance between the centers of the adjacent feed channels 10a. The more the feed channels 10a, the shorter the distance between the centers of the adjacent feed channels 10a, and the lower the overall structural strength of the die 100; and the more the feed channels 10a, the more complex the process and structure, and the higher the producing difficulty. Therefore, the quantity of the feed channels 10a should not exceed 2580.

Exemplarily, when the quantity of the feed channels 10a ranges from 100 to 2580, the process and structure are simple, the manufacturing is easy, and the overall structural strength of the die 100 is relatively high.

In one embodiment, the porosity of the second main body 20 ranges from 15.1% to 72.5%, such as 15.1%, 16%, 17%, 18%, 19%, 19.6%, 20%, 23%, 25%, 30%, 32%, 35%, 38%, 40%, 45%, 50%, 52.5%, 55%, 57%, 60%, 65%, 68.5%, 70%, or 72.5%.

When the porosity of the second main body 20 is greater than 72.5%, the strength of the second main body 20 will be decreased to affect the strength of the die 100, which may affect the service life of the die 100 due to the high extrusion pressure during the extrusion process. In addition, if the porosity of the second main body 20 is greater than 72.5%, it means that the porosity of the aerosol-generating articles produced by the die 100 is relatively small, which will reduce aerosol transmission efficiency, thereby reducing the atomization efficiency and smoke volume of the aerosol-generating articles.

When the porosity of the second main body 20 is less than 15.1%, it is difficult for the raw material mixture for producing aerosol-generating articles to pass through the second main body 20, thereby reducing the producing efficiency of the aerosol-generating articles. In addition, the excessively small porosity of the second main body 20 is not conducive to the processing and manufacturing of the second main body 20. In addition, if the porosity of the second main body 20 is less than 15.1%, it means that the porosity of the aerosol-generating articles produced by the die 100 is relatively large, which will reduce the structural strength, heat conduction efficiency, and quality of the aerosol-generating articles, and further reduce the atomization efficiency and smoke volume of the aerosol-generating articles.

When the porosity of the second main body 20 ranges from 15.1% to 72.5%, the heat conduction efficiency and the aerosol transmission efficiency of the aerosol-generating articles can be ensured, that is, the aerosol-generating articles can have high heat conduction efficiency and high aerosol transmission efficiency at the same time, thereby improving the atomization efficiency and smoke volume of the aerosol-generating articles. At the same time, the aerosol-generating articles can also have high structural strength.

In one embodiment, the ratio of the porosity of the first main body 10 to the porosity of the second main body 20 is n, and $1 \leq n \leq 3$, such as 1, 1.05, 1.1, 1.2, 1.25, 1.3, 1.4, 1.5, 1.6, 1.7, 1.8, 1.9, 2, 2.05, 2.1, 2.2, 2.25, 2.3, 2.4, 2.5, 2.6, 2.7, 2.8, 2.9, or 3.

By controlling the ratio of the porosity of the first main body 10 to the porosity of the second main body 20 to be 1 to 3, after the raw material mixture enters the extrusion channels 20a through the feed channels 10a, the raw material mixture can be further extruded in the extrusion channels 20a, thereby promoting complete kneading of the mesh structures; and when the porosity of the aerosol-generating article is definite, the density of the aerosol-generating article can be controlled. Therefore, by controlling the extrusion pressure on the raw material mixture in the extrusion channels 20a to control the density of the aerosol-generating article, the heat conduction efficiency and the aerosol transmission efficiency of the aerosol-generating article can be ensured, that is, the aerosol-generating article can have high heat conduction efficiency and high aerosol transmission efficiency at the same time, thereby improving the atomization efficiency of the aerosol-generating article.

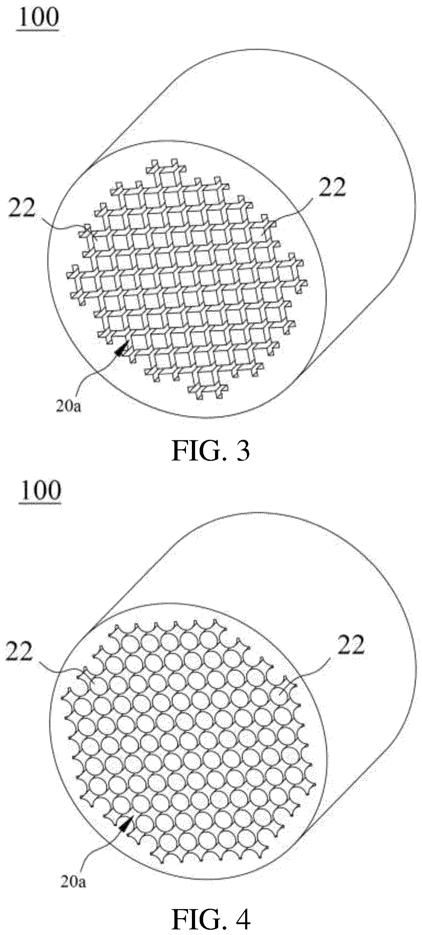

Exemplarily, referring to FIG. 3 to FIG. 10, the second main body 20 includes a shell 21 and a plurality of columns 22 arranged in the shell 21, and the columns 22 are spaced apart to form the extrusion channels 20a, that is, the extrusion channels 20a are formed between the surfaces of the columns 22.

The columns 22 are arranged parallel to each other, and one end of each column 22 is, for example, fixed to the end surface of the first main body 10. The raw material mixture enters the extrusion channels 20a between the columns 22 after passing through the feed channels 10a, and is extruded from the end surface of one end of the columns 22 away from the first main body 10.

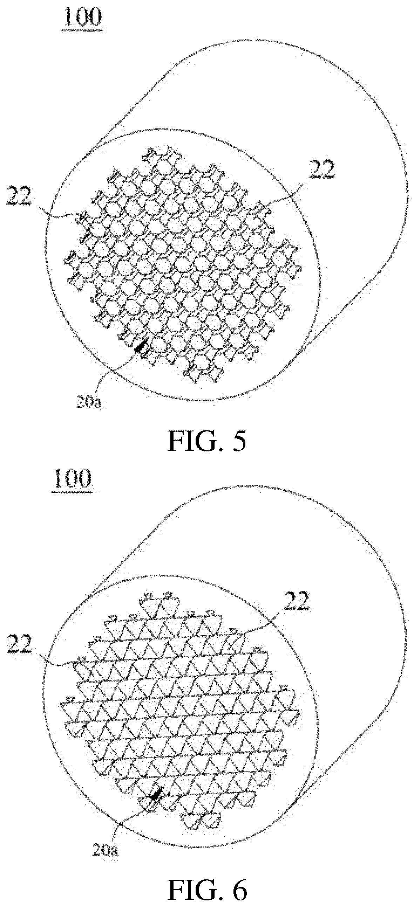

It should be noted that the shape of the columns 22 is not limited herein. Exemplarily, on the planes perpendicular to the axial direction of the second main body 20, the cross-sectional shape of the columns 22 is circular, polygonal, elliptical, track-shaped, or sector-shaped as shown in FIG. 4. The polygon may be a regular polygon, such as a square as shown in FIG. 3, a regular triangle as shown in FIG. 6, or a regular hexagon as shown in FIG. 5.

In the embodiments of the present application, the axial direction of the second main body 20 refers to the extrusion direction. For example, when the appearance contour of the second main body 20 is cylindrical, the axial direction is a height direction perpendicular to the bottom surface of the second main body 20. For example, when the appearance contour of the second main body 20 is cuboid, the axial direction is still as defined above, that is, the extrusion direction. The axial direction of the second main body 20 may be any direction of the length, width, or height of the cuboid.

The cross-sectional shape of the columns 22 is taken along the planes perpendicular to the axial direction of the second main body 20.

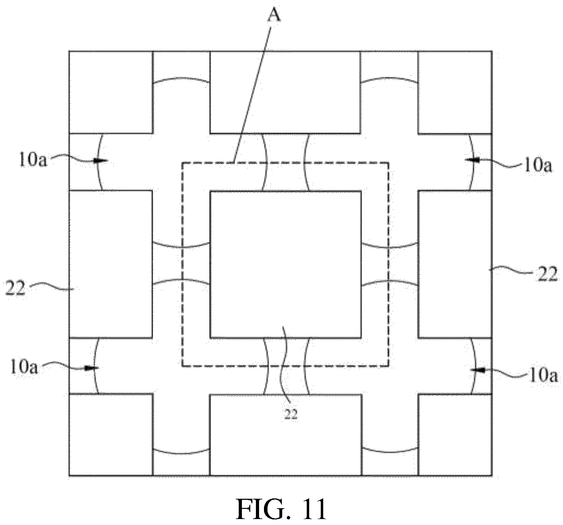

In one embodiment, referring to FIG. 11, the die 100 includes a plurality of repeating units, each repeating unit includes one column 22 and a plurality of feed channels 10a corresponding to the column 22, and the plurality of feed channels 10a in each repeating unit are arranged in a circumferential direction around the center of the column 22. That is, each repeating unit includes one column 22, the column 22 in the repeating unit corresponds to the plurality of feed channels 10a, that is, each repeating unit includes the plurality of feed channels 10a surrounding the peripheral side of the column 22, and the plurality of feed channels 10a are arranged in the circumferential direction around the center of the column 22, that is, the centers of the plurality of feed channels 10a are located on the same circle with the center of the column 22 as the circle center. In this case, the far mixture extruded from the feed channels 10a can be filled to the periphery side of the column 22. The arrangement of the plurality of feed channels 10a in the circumferential direction around the center of the column 22 can avoid incomplete filling to some extent.

The quantity of the feed channels 10a in each repeating unit is not limited herein, such as 2, 3, 4, 5, 6, 7, 8, 9, 10, 15, 20, or 30.

It can be understood that the plurality of feed channels 10a are arranged in the circumferential direction around the center of the column 22, that is, lines connecting the centers of the plurality of feed channels 10a may form a circle or rectangle.

It should be noted that the feed channels 10a in one repeating unit can also form the feed channels 10a in another repeating unit, that is, the same feed channel 10a can surround the peripheral side of the plurality of columns 22.

Specifically, referring to FIG. 11, each repeating unit includes one column 22 and four feed channels 10a corresponding to the column 22, lines connecting the centers of the four feed channels 10a form a square, and the center line of the square coincides with the center axis of the column 22.

The center line of the square and the center axis of the column 22 define a virtual reference line.

The coincidence indicates that the center line of the square may completely or roughly coincide with the center axis of the column 22, that is, there may be a certain deviation between the center line of the square and the center axis of the column 22.

In a specific embodiment, referring to FIG. 11, each repeating unit includes one column 22 and four feed channels 10a corresponding to the column 22, lines connecting the centers of the four feed channels 10a form a square, and the center line of the square coincides with the center axis of the column 22. Taking the square as one calculation unit A, the die 100 in this embodiment can be regarded an array formed by a plurality of such calculation units A. The cross-sectional shape of the feed channels 10a is circular, and the cross-sectional shape of the column 22 is square. When the die 100 is designed, after the center distance between two adjacent feed channels 10a is determined, the size of the feed channels 10a determines the porosity of the first main body 10. Taking the above calculation unit A as an example, a calculation method for the porosity of the first main body 10 is as follows: if the center distance between the two adjacent feed channels 10a is 1.8 mm and the diameter of the feed channel 10a is 1.5 mm, the porosity of one calculation unit A is as follows:

$$P_1 = \frac{\pi\left(\dfrac{1.5}{2}\right)^2}{1.8 \times 1.8} \times 100\% = 54.54\%$$

Therefore, if the center distance between the two adjacent feed channels 10a is definite, different porosities of the first main body 10 can be obtained by designing different diameters of the feed channels 10a.

In another specific embodiment, referring to FIG. 11, each repeating unit includes one column 22 and four feed channels 10a corresponding to the column 22, lines connecting the centers of the four feed channels 10a form a square, and the center line of the square coincides with the center axis of the column 22. Taking the square as one calculation unit A, the die 100 in this embodiment can be regarded as an array formed by a plurality of such calculation units A. The cross-sectional shape of the feed channels 10a is circular, and the cross-sectional shape of the column 22 is square. When the die 100 is designed, after the center distance between two adjacent feed channels 10a is determined, the size of the column 22 determines the porosity of the second main body 20. Taking the above calculation unit A as an example, a calculation method for the porosity of the second main body 20 is as follows: if the center distance between the two adjacent feed channels 10a is 1.8 mm and the side length of the column 22 is 1.3 mm, the porosity of one calculation unit A is as follows:

$$P_2 = \frac{(1.8 \times 1.8 - 1.3 \times 1.3)}{1.8 \times 1.8} \times 100\% = 47.84\%$$

Therefore, if the center distance between the two adjacent feed channels 10a is definite, different porosities of the second main body 20 can be obtained by designing different side lengths of the column 22.

It can be understood that basic design parameters of the die 100 can be determined by determining the center distance between two adjacent feed channels 10a, the porosity of the first main body 10, and the porosity of the second main body 20.

The aerosol-generating article produced by the die 100 in the embodiments of the present application through a continuous extrusion process has a three-dimensional ordered honeycomb consumable structure with organic solid powder as a skeleton material, and such a structure is conducive to obtaining high heat conduction performance and high aerosol transmission efficiency, thereby improving the atomization efficiency of the aerosol-generating article. The specific die 100 in the embodiments of the present application is designed to achieve a honeycomb structure with a small porosity (less than 75%), so as to ensure the weight of the aerosol-generating article and the release quantity of effective ingredients. Due to the moderate porosity of the aerosol-generating article (30% to 60%), the die 100 with large porosity is required for extrusion, thereby requiring high material strength and processing accuracy of the die 100.

The feed channels 10a may be arranged in a square or hexagon or asymmetrically.

Exemplarily, referring to FIG. 1 and FIG. 2, all the feed channels 10a are distributed along a plurality of trajectory lines. The feed channels 10a along the single trajectory line are arranged linearly in a first direction, the plurality of trajectory lines are arranged in a second direction, and the first direction is not parallel to the second direction. The first direction and the second direction constitute a planar two-dimensional coordinate system, and can define the planar arrangement of the feed channels 10a. That is, the feed channels 10a are arranged regularly, thereby facilitating the processing of each feed channel 10a according to a predetermined arrangement pattern during a molding process.

Exemplarily, the feed channels 10a along the single trajectory line are arranged equidistantly. The equidistant arrangement refers to an equal distance between the hole centers of two adjacent feed channels 10a. As such, the hole walls of the two adjacent feed channels 10a have roughly the same shape and size, thereby improving the uniformity of feeding during the extrusion molding process.

It should be noted that the first direction may be a straight line or a curve; and the second direction may be a straight line or a curve.

For example, in some embodiments, the feed channels 10a along the single trajectory line are arranged in the circumferential direction around the center of the first main body 10, and the plurality of trajectory lines are arranged in concentric circles in a radial direction, that is, the first direction is the circumferential direction around the center of the first main body 10, and the second direction is the radial direction.

In other embodiments, referring to FIG. 1 and FIG. 2, the feed channels 10a along the single trajectory line are arranged linearly in the first direction, the plurality of trajectory lines are arranged in parallel in the second direction, and the first direction is perpendicular to the second direction.

The distance between the two adjacent feed channels 10a along the single trajectory line is equal to the distance between the two adjacent trajectory lines.

It should be noted that all the columns 22 may be arranged on the second main body 20 in a form of uniform distribution or non-uniform distribution.

The arrangement of the columns 22 may be the same as or different from the arrangement of the feed channels 10a. The arrangement of the columns 22 is, for example, the arrangement of the feed channels 10a described above.

In the description of the present application, the terms "in one embodiment", "in some embodiments", "in other embodiments", "in yet other embodiments", or "exemplarily" mean that the specific features, structures, materials, or characteristics described in conjunction with the embodiment or example are included in at least one embodiment or example of the present application. In the present application, the illustrative expressions of the above terms do not necessarily refer to the same embodiment or example. Moreover, the described specific features, structures, materials, or characteristics may be combined in any one or more embodiments or examples in an appropriate manner. In addition, those skilled in the art can combine different embodiments or examples described in the present application and the features of different embodiments or examples on a non-conflict basis.

The above descriptions are merely the preferred embodiments of the present application and are not intended to limit the present application. For those skilled in the art, the present application may have various modifications and variations. Any modifications, equivalent substitutions, improvements, etc. made within the spirit and principles of the present application fall within the scope of protection of the present application.

**Claims**

1.  A die for producing aerosol-generating articles, comprising:

    a first main body, wherein the first main body has a plurality of feed channels inside, each of the feed channels runs through two opposite ends of the first main body in an axial direction, and on planes perpendicular to the axial direction of the first main body, a cross-sectional area of the feed channel located upstream in a feeding direction is not less than a cross-sectional area of the feed channel located downstream in the feeding direction; and a second main body arranged at one end of the first main body in the axial direction, wherein the second main body has a plurality of extrusion channels inside, each of the extrusion channels runs through two opposite ends of the second main body in the axial direction and is in communication with the feed channel, on planes perpendicular to the axial direction of the second main body, a cross-sectional area of the extrusion channel located upstream in an extrusion direction is not less than a cross-sectional area of the extrusion channel located downstream in the extrusion direction, and a maximum value of the cross-sectional area of the extrusion channels is less than or equal to a minimum value of the cross-sectional area of the feed channels.

2.  The die of claim 1, wherein on the planes perpendicular to the axial direction of the first main body, the cross-sectional area of each of the feed channels is the same or gradually decreases in the feeding direction.

3.  The die of claim 1, wherein on the planes perpendicular to the axial direction of the second main body, the cross-sectional area of each of the extrusion channels is the same or gradually decreases in the extrusion direction.

4.  The die of claim 1, wherein the feed channels are formed in the first main body in a form of uniform distribution, and on the planes perpendicular to the axial direction of the first main body, the cross-sectional shape of the feed channels is circular.

5.  The die of claim 1, wherein the feed channels are parallel to a center axis of the die, and a distance between centers of two adjacent feed channels ranges from 0.500 mm to 2.54 mm.

6.  The die of claim 1, wherein the second main body comprises a shell and a plurality of columns arranged in the shell, and the columns are spaced apart to form the extrusion channels.

7.  The die of claim 6, comprising a plurality of repeating units, wherein each of the repeating units comprises one column and a plurality of feed channels corresponding to the column, and the plurality of feed channels in each repeating unit are arranged in a circumferential direction around a center of the column.

8.  The die of claim 7, wherein each repeating unit comprises one column and four feed channels corresponding to the column, lines for connecting centers of the four feed channels form a square, and a center line of the square coincides with a center axis of the column.

9.  The die of claim 6, wherein on the planes perpendicular to the axial direction of the second main body, a cross-sectional shape of the columns is circular, polygonal, elliptical, track-shaped, or sector-shaped.

10. The die of claim 1, wherein a quantity of the feed channels ranges from 100 to 2580; and/or, on the planes perpendicular to the axial direction of the first main body, the cross-sectional shape of the feed channels is circular, polygonal, elliptical, track-shaped, or sector-shaped.

11. The die of claim 1, wherein a porosity of the second main body ranges from 15.1% to 72.5%; and/or, a porosity of the first main body ranges from 19.6% to 72.5%.

**12.** The die of claim 1, wherein a ratio of a porosity of the first main body to a porosity of the second main body is n, and $1 \leq n \leq 3$.

**13.** The die of claim 1, wherein all of the feed channels are distributed along a plurality of trajectory lines, the feed channels along a single trajectory line are arranged linearly in a first direction, the plurality of trajectory lines are arranged in a second direction, and the first direction is not parallel to the second direction.

**14.** The die of claim 13, wherein the feed channels along the single trajectory line are arranged in a circumferential direction around a center of the first main body, and the plurality of trajectory lines are arranged in concentric circles in a radial direction.

**15.** The die of claim 13, wherein the feed channels along the single trajectory line are arranged linearly in the first direction, the plurality of trajectory lines are arranged in parallel in the second direction, and the first direction is perpendicular to the second direction.

**16.** The die of claim 15, wherein a distance between two adjacent feed channels along the single trajectory line is equal to a distance between two adjacent trajectory lines.

FIG. 1

FIG. 2

100

FIG. 3

100

FIG. 4

FIG. 5

FIG. 6

FIG. 7

FIG. 8

FIG. 9

FIG. 10

FIG. 11

## INTERNATIONAL SEARCH REPORT

| International application No. |
| --- |
| **PCT/CN2023/135509** |

| A. CLASSIFICATION OF SUBJECT MATTER |
| --- |
| A24C 5/01(2020.01)i;  B30B 11/22 (2006.01)i |

According to International Patent Classification (IPC) or to both national classification and IPC

| B. FIELDS SEARCHED |
| --- |

Minimum documentation searched (classification system followed by classification symbols)

IPC：A24C B30B

Documentation searched other than minimum documentation to the extent that such documents are included in the fields searched

Electronic data base consulted during the international search (name of data base and, where practicable, search terms used)

CNABS: CNTXT; CNKI: 烟草, 烟叶, 气溶胶, 基质, 蜂窝, 模具, 挤, 通道; VEN; USTXT: JPTXT: EPTXT; WOTXT: tobacco, aerosol, substrate, stroma, base material, bulk material, honeycomb, mold, mould, extrusion, extrude, squeeze, passage, alleyway, channel.

| C. DOCUMENTS CONSIDERED TO BE RELEVANT |
| --- |

| Category* | Citation of document, with indication, where appropriate, of the relevant passages | Relevant to claim No. |
| --- | --- | --- |
| Y | GB 1471217 A (GEN REFRACTORIES CO.) 21 April 1977 (1977-04-21) description, pages 3-4, and figures 1-7 | 1-16 |
| Y | CN 111629612 A (PHILIP MORRIS PRODUCTS S.A.) 04 September 2020 (2020-09-04) description, paragraphs 56-69, and figures 1-10 | 1-16 |
| Y | US 4178145 A (KYOTO CERAMIC CO., LTD.) 11 December 1979 (1979-12-11) description, columns 4-8, and figures 1-7 | 1-16 |
| A | CN 216635330 U (SUZHOU JWELL PRECISION MACHINERY CO., LTD.) 31 May 2022 (2022-05-31) entire document | 1-16 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 March 2024** | **02 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
#### Information on patent family members

International application No.

**PCT/CN2023/135509**

| Patent document cited in search report | | | Publication date (day/month/year) | Patent family member(s) | | | Publication date (day/month/year) |
|---|---|---|---|---|---|---|---|
| GB | 1471217 | A | 21 April 1977 | IT | 1012600 | B | 10 March 1977 |
| | | | | JPS | 5026808 | A | 19 March 1975 |
| | | | | FR | 2227936 | A1 | 29 November 1974 |
| | | | | FR | 2227936 | B1 | 27 January 1978 |
| | | | | DE | 2421277 | A1 | 14 November 1974 |
| | | | | DE | 2421277 | B2 | 14 October 1976 |
| | | | | DE | 2462043 | A1 | 11 December 1975 |
| | | | | US | 4021134 | A | 03 May 1977 |
| | | | | CA | 1058925 | A | 24 July 1979 |
| CN | 111629612 | A | 04 September 2020 | WO | 2019158334 | A1 | 22 August 2019 |
| | | | | BR | 112020013597 | A2 | 01 December 2020 |
| | | | | US | 2021000162 | A1 | 07 January 2021 |
| | | | | JP | 7386795 | B2 | 27 November 2023 |
| | | | | RU | 2020126716 | A | 15 March 2022 |
| | | | | EP | 3668330 | A1 | 24 June 2020 |
| | | | | KR | 20200119245 | A | 19 October 2020 |
| | | | | JP | 2021513850 | W | 03 June 2021 |
| | | | | RU | 2771769 | C2 | 11 May 2022 |
| | | | | RU | 2020126716 | A3 | 15 March 2022 |
| | | | | CN | 11629612 | B | 31 October 2023 |
| US | 4178145 | A | 11 December 1979 | None | | | |
| CN | 216635330 | U | 31 May 2022 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202320262671X